Europäisches Patentamt

(19) European Patent Office

Office européen des brevets

(11) Publication number: **0 131 569**
**B1**

(12) **EUROPEAN PATENT SPECIFICATION**

(45) Date of publication of patent specification: **25.11.87**

(21) Application number: **83900769.7**

(22) Date of filing: **24.01.83**

(86) International application number:
**PCT/US83/00111**

(87) International publication number:
**WO 84/02830 02.08.84 Gazette 84/18**

(51) Int. Cl.⁴: **A 23 N 1/00**

(54) **FRUIT CUTTER AND JUICER.**

(43) Date of publication of application:
**23.01.85 Bulletin 85/04**

(45) Publication of the grant of the patent:
**25.11.87 Bulletin 87/48**

(84) Designated Contracting States:
**BE DE FR GB NL**

(56) References cited:
**US-A-1 888 528**
**US-A-2 065 271**
**US-A-2 199 876**
**US-A-2 667 118**
**US-A-3 139 126**
**US-A-4 088 070**

(73) Proprietor: **THE AUTOMATIC ORANGE JUICER
CORP.
103-03 Metropolitan Avenue
Forest Hills, NY 11375 (US)**

(72) Inventor: **NELSON, Stewart, C.
215 Burns Street
Forest Hills, NY 11375 (US)**

(74) Representative: **Gordon, Michael Vincent et al
GILL JENNINGS & EVERY 53-64 Chancery Lane
London WC2A 1HN (GB)**

## Description

The present invention is directed to an extracting machine for automatically obtaining juice from citrus fruits, particularly oranges.

Extracting machines for this purpose are generally well known and are employed both in commercial juicing operations and in food serving establishments where juice is fresh squeezed for the consumer. In all such operations, it is necessary that a cut surface of the citrus fruit be exposed, for example by halving the citrus fruit, which is then squeezed so as to extract the juice, without removing the undesirable flavour components from the rind or peel. The juice which has been expressed from the cut fruit halves is then recovered, while the rinds are discarded.

Many patents have described the type of machinery generally used in accordance with the present invention.

A fruit juice extractor of which the present invention is an improvement is that disclosed in U.S. patent 2,723,618. It describes how oranges, for example, are cut into halves, the halves are advanced, cut surfaces downward, over stationary male press elements and then squeezed by cup-like female press elements which are moved down axially to interact with the male press elements. When the female press elements are retracted, the rinds are ejected, while the juice from the citrus fruit is recovered. More particularly, it describes how the citrus fruit is fed along a chute towards a cutting edge of a straight stationary knife blade. The knife blade is also located in a vertical plane and in a medial plane of the path of the chute. The knife blade is also located in front of a cam pedestal provided by a stationary upstanding projection with a leading edge followed by lateral concave faces. The concave faces serve as cam surfaces for turning and displacing fruit halves cut by the cutting edge of the knife blade towards the male press elements, ready to be squeezed by the female press elements.

In U.S. patent 2,723,618, the cutting edge of the knife blade is arranged to extend vertically. However, knife blades are known whose cutting edges do not extend vertically. For example, U.S. patent 2,065,271 discloses a knife blade whose cutting edge is of irregular inclination and includes points along its length for piercing the citrus fruit before it is cut, this knife blade being followed by oscillatory mounted flippers rather than a stationary cam pedestal. Moreover, U.S. patent 2,311,565 discloses a knife blade whose cutting edge is V-shaped, this knife blade being followed by spreader means in the form of a pair of pivotally mounted plates.

Similar machines and operations are described in, for example, U.S. patents 2,629,317; 2,572,286; 2,413,866; 2,531,026; 3,185,072; 2,199,876 and 4,088,070. The referenced patents employ knives for cutting the citrus fruit, the knives generally being of the rotating blade, horizontal blade, or vertical blade types. With the vertical and horizontal blades, in particular, a mechanism is employed for forcing the citrus fruit to be cut over the blade.

It has been found that none of these blades performs totally adequately when the fruit to be cut is not firm but has softened, a frequent condition.

When soft fruit is to be cut, an improperly angled knife blade can cause the fruit to collapse before cutting begins. Under these circumstances, one may express some of the undesirable materials from the rind and, additionally, the halves which are obtained can never be properly placed within the squeezing mechanism to obtain the desired expressing operation. Either some of the flesh never has the juice expressed from it, or additional undesirable materials are pressed from the rind or both. These problems are particularly severe with the horizontal and vertical knives particularly employed in the prior art. However, the problem is not solved through use of the rotating knives of some of the other patents referred to, as control is lacking.

In accordance with the present invention, a citrus fruit juice extracting machine comprises:
— means for feeding whole citrus fruit towards a cutting edge of cutting means, the feeding means being in the form of a chute;
— cutting means in the form of a straight stationary knife blade located in a vertical plane and in a medial plane of the path of the chute;
— a cam pedestal supporting the knife blade and provided by a stationary upstanding projection with lateral concave faces to serve as cam surfaces for turning and displacing fruit halves cut by a cutting edge of the knife blade towards squeezing or expressing means and with a leading edge of the cam pedestal being located behind the knife blade;
— means for squeezing or expressing juice from the cut fruit halves;
— means for recovering the expressed juice; and
— means for discarding the rind of the fruit;
characterised in that the cutting edge of the knife blade and the leading edge of the cam pedestal behind the knife blade are inclined at an angle of inclination of from 45° to 80° relatively to the horizontal.

It has been found that even softened citrus fruit can be adequately and accurately severed employing a knife blade which is sloped in the manner defined hereinabove, and because of the slope of the knife blade, it is also possible to slope the cam surfaces of the cam pedestal, onto which the cut fruit halves are forced, so as to provide better control in locating the severed pieces of the citrus fruit onto the squeezing means.

Preferably the angle of inclination is from 45° to 60°, and more preferably is 45°.

Also preferably, a small space is maintained between the trailing edge of the knife blade and the leading edge of the cam pedestal; the cutting edge of the knife blade is serrated; the cutting edge of the knife blade is inclined relatively to the chute such that fruit moving along the chute first meets a lower portion of the cutting edge of the knife blade; the serrations are on the lower portion of the cutting edge of the knife blade; the ratio of the height, length and half-width of the cam pedestal is approximately 1:1:0.5; and the radius of curvature of each of the lateral concave faces of the cam pedestal is gradual and steady.

A citrus fruit juice extracting machine, in accordance with the present invention, is shown in the accompanying drawings, in which:

Figure 1 is a fragmentary perspective view of the extracting machine;

Figure 2 is a sectional view along the line 2—2 of Figure 1; and

Figure 3 is a sectional view along the line 3—3 of Figure 2.

Referring to the drawings, a portion of a fruit juice extractor, particularly the cutter, cam separator and a portion of the expressing mechanism, is illustrated. The remainder of the system can be as illustrated in previously referenced Matthews U.S. patent 2,723,618, the remainder of that disclosure being incorporated herein by reference. It should be recognised, however, that the use of the present invention as described herein should not be restricted to the remaining mechanism and structure of the Matthews patent. That mechanism and structure is provided merely as illustrative of structure and mechanism which can be employed in accordance with the present invention.

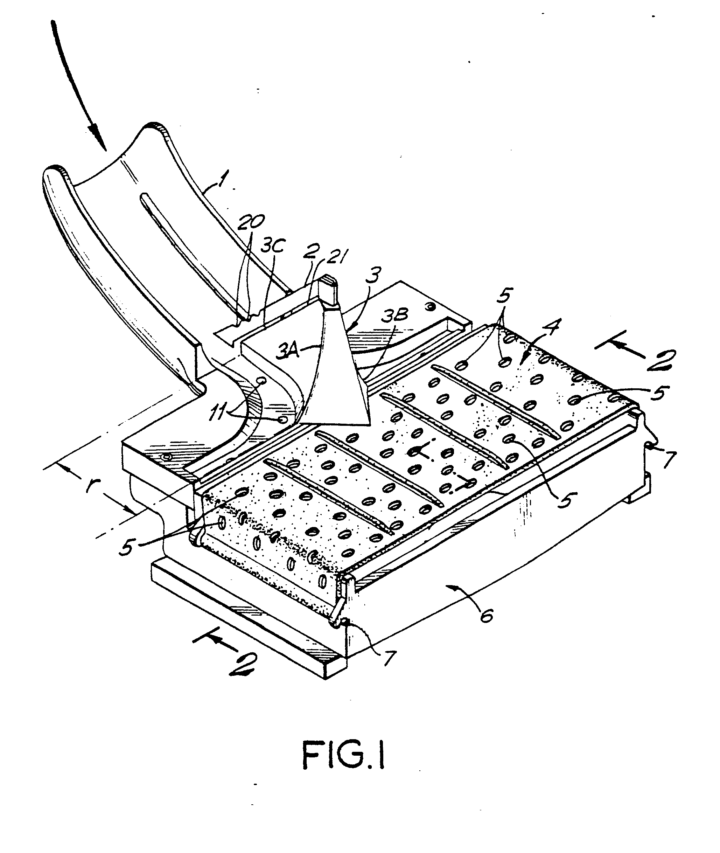

Specifically, Figure 1 shows a chute 1 through which the citrus fruit, particularly oranges, is fed to be halved. The fruit is forced against the sloped, or inclined knife 2 which is attached to the cam pedestal 3. From the cam pedestal 3, the now-sliced fruit is fed, cut side down, to the top surface of a rubber sheet 4. As illustrated, the rubber sheet 4 is provided with a plurality of perforations 5 through which juice expressed from the citrus fruit passes. The rubber sheet 4 is attached to a base structure 6 and is stretched to a generally taut condition via spindles 7.

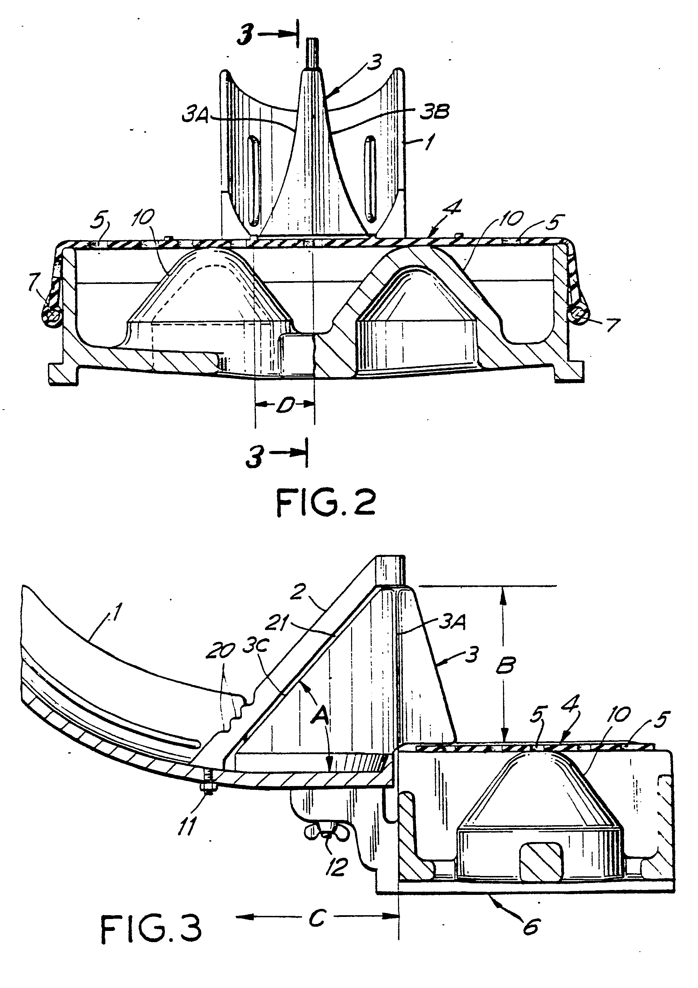

As shown in Figure 2, the base 6 includes male cone members 10. The sliced fruit is placed on the rubber sheet 4 immediately above the cones 10 to be acted on by female press members (not shown).

As shown in Figure 3, the cam pedestal 3 and sloped knife 2 are attached by bolt members 11 and 12 to the chute 1 and base member 6, respectively. Any method for attaching the sloped knife 2 and cam pedestal 3 to the chute 1 and base member 6 which provides a firm attachment can be employed.

The critical facet of the present invention is the angle A at which the sloped knife 2 and leading edge of the cam pedestal 3 are inclined in the structure. As indicated, the sloping of the knife 2 is accomplished in order to prevent friction and crushing of the citrus fruit being halved, particularly when soft fruit is employed. In accordance with the present invention, the angle A is between 45° and 80°, preferably between 45° and 60°, most preferably at 45°.

Additionally, the long, compound angle of the cam pedestal 3 allows the proper spreading of soft fruit before squeezing. In the prior art, the cam pedestal is relatively short and the cut fruit, particularly when it is soft, may not have sufficient distance in which to fully and gradually open. The prior art presents problems in moving the cut fruit from the cutter to the squeezing mechanism. These problems are eliminated by the cam pedestal 3 disclosed herein. To accomplish the long, compound angle, the height B of the cam pedestal 3, the length C of the cam pedestal 3, and the half-width D of the cam pedestal 3, should have an approximate ratio of 1:1:0.5. Further, the radius of curvature r of each concave cam face 3A and 3B of the cam pedestal 3 should be gradual and steady.

The sloped knife 2, as illustrated, is provided with serrations 20, which aid in initiating cutting of the fruit to be halved. As illustrated, these serrations are on the lower portion of the cutting edge of the sloped knife 2, nearest the chute 1. While this is the preferred construction, the serrations may be omitted entirely, or may be placed along the entire cutting edge of the sloped knife 2.

In operation citrus fruit such as an orange is fed along the curved chute 1 to the cutting edge of the sloped knife 2. It is then forced across the blade (sloped knife 2) so as to be halved by a mechanism (not shown, but as illustrated in the Matthews patent), and continued movement of the mechanism for forcing the citrus fruit against the sloped knife 2 causes the halves of the fruit to be moved along the lateral faces 3A and 3B of the cam pedestal. The sloping of the cam pedestal 3 aids in assuring placement of the cut fruit halves in the proper position on the rubber sheet 4. Because the expressing of the juice from the cut fruit halves, the removal of the juice from the base member 6 and the discarding of the rinds form no part of the present invention, they are not illustrated specifically.

In order to provide for proper support of the sloped knifed 2, it should parallel leading edge 3C of the cam pedestal. As illustrated, however, a small space 21 is left between this leading edge 3C of the cam pedestal and the trailing edge of the sloped knife 2. This allows for a small amount of flexing of the sloped knife 2 during cutting of the fruit, and aids in the cutting operation, again particularly when soft fruit is employed.

**Claims**

1. A citrus fruit juice extracting machine comprising:
— means for feeding whole citrus fruit towards a cutting edge of cutting means, the feeding means being in the form of a chute (1);
— cutting means in the form of a straight stationary knife blade (2) located in a vertical plane and in a medial plane of the path of the chute (1);
— a cam pedestal (3) supporting the knife blade (2) and provided by a stationary upstanding projection with lateral concave faces to serve as cam surfaces (3A, 3B) for turning and displacing fruit halves cut by a cutting edge of the knife blade (2) towards squeezing or expressing means and with a leading edge (3C) of the cam pedestal (3) being located behind the knife blade (2);

— means for squeezing or expressing juice from the cut fruit halves;

— means for recovering the expressed juice; and

— means for discarding the rind of the fruit;

characterised in that the cutting edge of the knife blade (2) and the leading edge (3C) of the cam pedestal (3) behind the knife blade (2) are inclined at an angle of inclination (A) of from 45° to 80° relatively to the horizontal.

2. A citrus fruit juice extracting machine according to claim 1, characterised in that the angle of inclination (A) is from 45° to 60°.

3. A citrus fruit juice extracting machine according to claim 2, characterised in that the angle of inclination (A) is 45°.

4. A citrus fruit juice extracting machine according to any preceding claim, characterised in that a small space (21) is maintained between the trailing edge of the knife blade (2) and the leading edge of the cam pedestal (3).

5. A citrus fruit juice extracting machine according to any preceding claim, characterised in that the cutting edge of the knife blade (2) is serrated (20).

6. A citrus fruit juice extracting machine according to any preceding claim, characterised in that the cutting edge of the knife blade (2) is inclined relatively to the chute (1) such that fruit moving along the chute (1) first meets a lower portion of the cutting edge of the knife blade (2).

7. A citrus fruit juice extracting machine according to claim 5 and claim 6, characterised in that the serrations (20) are on the lower portion of the cutting edge of the knife blade (2).

8. A citrus fruit juice extracting machine according to any preceding claim, characterised in that the ratio of the height (B), length (C) and half-width (D) of the cam pedestal (3) is approximately 1:1:0.5.

9. A citrus fruit juice extracting machine according to any preceding claim, characterised in that the radius of curvature of each of the lateral concave faces of the cam pedestal (3) is gradual and steady.

**Patentansprüche**

1. Citrusfruchtsaftgewinnungsmaschine, die umfasst:

— Mittel zum Zuführen ganzer Citrusfrüchte gegen eine Schneidkante der Schneidmittel, wobei diese Zuführungsmittel in Form einer Rinne (1) vorliegen;

— Schneidmittel in Form eines geraden feststehenden Messerblatts (2), das in einer Vertikalebene sowie in einer Mittelebene der Bahn der Rinne (1) angeordnet ist;

— eine Nockenlagerstütze (3), die das Messerblatt (2) stützt und mit einem stationären stehenden Vorsprung mit seitlichen konkaven Flächen versehen ist, um als Nockenflächen (3A, 3B) zu dienen, um durch eine Schneidkante des Messerblattes (2) geschnittene Fruchthälften gegen eine Quetsch- oder Auspreßeinrichtung zu drehen und zu verschieben und wobei eine Anlaufkante (3C) des Nockenlagerbocks (3) hinter dem Messerblatt (2) angeordnet ist;

— Einrichtungen zum Quetschen oder Auspressen von Saft von den geschnittenen Fruchthälften;

— Einrichtungen zum Gewinnen des ausgepressten Saftes und

— Einrichtungen zum Auswerfen der Fruchtschalen;

dadurch gekennzeichnet, daß die Schneidkante des Messerblattes (2) und die Anlaufkante (3C) des Nockenstützbocks (3) hinter dem Messerblatt (2) unter einem Neigungswinkel (A) zwischen 45° bis 80° relativ zur Horizontal en geneigt sind.

2. Citrusfruchtsaftgewinnungsmaschine nach Anspruch 1, dadurch gekennzeichnet, daß der Neigungswinkel (A) zwischen 45° und 60° beträgt.

3. Citrusfruchtsaftgewinnungsmaschine nach Anspruch 2, dadurch gekennzeichnet, daß der Neigungswinkel (A) 45° beträgt.

4. Citrusfruchtsaftgewinnungsmaschine nach einem der vorhergehenden Ansprüche, dadurch gekennzeichnet, daß ein kleiner Raum (21) zwischen der hinteren Kante des Messerblattes (2) und der Anlaufkante des Nockenstützbocks (3) aufrechterhalten ist.

5. Citrusfruchtsaftgewinnungsmaschine nach einem der vorhergehenden Ansprüche, dadurch gekennzeichnet, daß die Schneidkante des Messerblattes (2) gezahnt ist (20).

6. Citrusfruchtsaftgewinnungsmaschine nach einem der vorhergehenden Ansprüche, dadurch gekennzeichnet, daß die Schneidkante des Messerblattes (2) relativ zur Rinne (1) derart geneigt ist, daß sich längs der Rinne (1) bewegende Früchte zunächst auf einen unteren Teil der Schneidkante des Schneidblattes (2) auftreffen.

7. Citrusfruchtsaftgewinnungsmaschine nach Anspruch 5 und 6, dadurch gekennzeichnet, daß die Zahnungen (20) auf dem unteren Teil der Schneidkante des Messerblattes (2) vorgesehen sind.

8. Citrusfruchtsaftgewinnungsmaschine nach einem der vorhergehenden Ansprüche, dadurch gekennzeichnet, daß das Verhältnis von Höhe (B), Länge (C) und halber Breite (D) des Nockenstützbocks (3) in etwa 1:1:0,5 beträgt.

9. Citrusfruchtsaftgewinnungsmaschine nach einem der vorhergehenden Ansprüche, dadurch gekennzeichnet, daß der Krümmungsradius jeder der seitlichen konkaven Flächen des Nockenlagerbocks (3) abgestuft bzw. graduell und stetig verläuft.

**Revendications**

1. Dispositif d'extraction du jus des agrumes comprenant:

— des moyens pour amener des agrumes entiers en direction d'un bord tranchant d'un organe de coupe, ces moyens d'amenée présentant la forme d'une goulotte (1);

— un organe de coupe présentant la forme d'une lame de couteau (2) fixe et rectiligne, positionée dans un plan vertical et dans un plan médian de la voie d'acheminement définie par la goulotte (1);

— un socle à cames (3) supportant la lame de couteau (2) et formé par un élément saillant vertical et fixe présentant des faces latérales concaves constituant des surfaces de came (3A, 3B) destinées à retourner les moitiés de fruit coupées par un bord tranchant de la lame de couteau (2) et à les transférer en direction de moyens de compression ou de pressage, un bord avancé (3C) du socle à cames (3) étant situé derrière la lame de couteau (2);

— des moyens pour écraser ou presser les moitiés de fruit coupées afin d'en extraire le jus;

— des moyens pour recueillir le jus exprimé; et

— des moyens pour rejeter l'écorce des fruits;

caractérisé en. ce que le bord tranchant de la lame de couteau (2) et le bord avancé (3C) du socle à cames (3) placé derrière la lame de couteau (2), sont placés en biais, avec un angle d'inclinaison (A) de 45° à 80° par rapport à l'horizontale.

2. Dispositif d'extraction du jus des agrumes selon la revendication 1, caractérisé en ce que l'angle d'inclinaison (A) a une valeur de 45° à 60°.

3. Dispositif d'extraction du jus des agrumes selon la revendication 2, caractérisé que l'angle d'inclinaison (A) est de 45°.

4. Dispositif d'extraction du jus des agrumes selon l'une quelconque des revendications précédentes, caractérisé en ce qu'un petit espace (21) est réservé entre le bord arrière de la lame de couteau (2) et le bord avancé du socle à cames (3).

5. Dispositif d'extraction du jus des agrumes selon l'une quelconque des revendications précédentes, caractérisé en ce que le bord tranchant de la lame de couteau (2) est dentelé (20).

6. Dispositif d'extraction du jus des agrumes selon l'une quelconque des revendications précédentes, caractérisé en ce que le bord tranchant de la lame de couteau (2) est incliné par rapport à la goulotte (1) pour qu'un fruit arrivant le long de la goulotte (1) rencontre en premier une partie inférieure du bord tranchant de la lame de couteau (2).

7. Dispositif d'extraction du jus des agrumes selon la revendication 5 ou la revendication 6, caractérisé en ce que les dents (20) se trouvent sur la partie inférieure du bord tranchant de la lame de couteau (2).

8. Dispositif d'extraction du jus des agrumes selon l'une quelconque des revendications précédentes, caractérisé en ce que le rapport de la hauteur (B) à la longueur (C) et à la demi-largeur (D) du socle à cames (3) est approximativement de 1:1:0,5.

9. Dispositif d'extraction du jus des agrumes selon l'une quelconque des revendications précédentes, caractérisé en ce que la courbure de chacune des faces latérales concaves du socle à cames (3) est progressive et continue.

FIG.1

FIG.2

FIG.3